# EUROPÄISCHE PATENTSCHRIFT

(11) **EP 3 717 771 B1**
(45) Veröffentlichungstag und Bekanntmachung des Hinweises auf die Patenterteilung: **29.09.2021**
(21) Anmeldenummer: 18803359.1
(22) Anmeldetag: 07.11.2018
(51) Int. Cl.: F03D 15/00, F03D 80/80

(54) **FIXIERUNG EINES PITCHROHRS**
FIXING A PITCH TUBE
FIXATION D'UN TUBE POUR CONDUITS

(30) Priorität: 29.11.2017 DE 102017221362
(43) Veröffentlichungstag der Anmeldung: 07.10.2020
(73) Patentinhaber: ZF Friedrichshafen AG, 88046 Friedrichshafen (DE); ZF Wind Power Antwerpen NV, 3920 Lommel (BE)
(72) Erfinder: DE LAET, Wim, 2000 Antwerpen (BE); GEUDENS, Bart, 2470 Retie (BE)
(86) Internationale Anmeldenummer: PCT/EP2018/080414
(87) Internationale Veröffentlichungsnummer: WO 2019/105697

(56) Entgegenhaltungen:
- CN-A- 101 191 532
- CN-U- 201 714 592
- CN-U- 205 605 796
- DE-A1-102014 200 674

## Beschreibung

Die Erfindung betrifft eine Planetenstufe gemäß Anspruch 1.

Bei einer Windkraftanlage müssen Leitungen für die Pitchverstellung der Rotorblätter axial durch das Getriebe geführt werden. Hierfür ist gewöhnlich ein Pitchrohr vorgesehen. Aus dem Stand der Technik ist bekannt, das Pitchrohr an einem rotorseitig angeordneten, drehbar gelagerten Planetenträger zu fixieren. Zur axialen Fixierung bildet das Pitchrohr zwei Absätze aus, die mit einer Wange des Planetenträgers eine formschlüssige Verbindung eingehen.

Es ist schwierig, ein Rohr mit einem Absatz zu fertigen. Aus diesem Grund wird eine Muffe auf das Pitchrohr aufgesetzt, die einen ersten Absatz ausbildet. Einen zweiten Absatz bildet ein Sicherungsring aus, der in eine Nut eingesetzt wird.

Das Pitchrohr weist weiterhin eine Aussparung auf, in die ein Fixierelement eingreift. Das Fixierelement ist mit der Wange des Planetenträgers verschraubt. Auf diese Weise wird verhindert, dass sich das Pitchrohr relativ zu dem Planetenträger verdreht.

Die Druckschrift DE 10 2014 200 674 A1 offenbart ein Anschlussstück für ein Pitchrohr. Das Pitchrohr ist zweistückig ausgeführt und kann gegen ein Elastomerdichtung verspannt werden. Durch die Formänderung, welche die Elastomerdichtung infolge dessen erfährt, wird das Pitchrohr fixiert. Die Druckschrift CN 205605796 U offenbart eine Planetenstufe und ein Pitchrohr.

Der Erfindung liegt die Aufgabe zugrunde, die den aus dem Stand der Technik bekannten Lösung innewohnenden Nachteile zu eliminieren. Insbesondere soll ein Pitchrohr möglichst kostengünstig an einen Planetenträger fixiert werden.

Diese Aufgabe wird gelöst durch eine Planetenstufe nach Anspruch 1. Bevorzugte Weiterbildungen sind in den Unteransprüchen enthalten.

Eine Planetenstufe bezeichnet eine Anordnung mit einem Planetenträger, einem oder mehreren Planetenrädern, einem Hohlrad und einem Sonnenrad. Die Planetenräder sind drehbar in dem Planetenträger gelagert und kämmen jeweils mit dem Hohlrad und/oder dem Sonnenrad. Zwei der drei Komponenten Planetenträger, Hohlrad und Sonnenrad sind drehbar gelagert. Die dritte Komponente kann nicht oder nur beschränkt verdreht werden.

Die erfindungsgemäße Planetenstufe weist vorzugsweise einen drehbar gelagerten Planetenträger auf. Darüber hinaus umfasst sie mindestens ein Pitchrohr und mindestens ein Fixierelement.

Ein Rohr ist ein Hohlkörper mit genau zwei Mündungen und einer Wandung, welche die Mündungen miteinander verbindet. Vorzugsweise ist das Pitchrohr (welches im Folgenden auch Rohr genannt wird) gerade und weist eine gerade Mittelachse auf. Insbesondere kann das Rohr bezüglich der Mittelachse drehsymmetrisch oder rotationssymmetrisch sein. Bei der Grundform des Rohrs handelt es sich bevorzugt um einen Hohlzylinder.

Die Grundform eines Körpers bezeichnet allgemein die Form eines ursprünglichen Körpers, aus dem der erst genannte Körper durch Eliminieren einzelner Bereiche, etwa durch Einfügen von Aussparungen, entsteht. Bei einer solchen Aussparung kann es sich etwa um eine Nut handeln.

Das Rohr der erfindungsgemäßen Planetenstufe ist koaxial zu einer Drehachse der Planetenstufe angeordnet. Dies bedeutet, dass die Mittelachse des Rohrs und die Drehachse der Planetenstufe übereinstimmen. Bei der Drehachse der Planetenstufe handelt es sich um eine Drehachse der zwei, oben genannten drehbaren Komponente der Planetenstufe. Ist der Planetenträger drehbar ausgeführt, sind entsprechend die Mittelachse des Rohrs und die Drehachse des Planetenträgers identisch.

Das Rohr ist durch eine Wandung des Planetenträgers hindurch geführt. Dies bedeutet, dass die Wandung axial, d.h. bezüglich der Drehachse der Planetenstufe, zwischen den beiden Mündungen des Rohrs angeordnet ist. Eine erste Mündung des Rohrs und die Wandung sind auf unterschiedlichen Seiten einer ersten radial verlaufenden, d.h. orthogonal zu der Drehachse ausgerichteten, Ebene angeordnet. Entsprechend sind die zweite Mündung und die Wandung auf unterschiedlichen Seiten einer zweiten radial ausgerichteten Ebene angeordnet. Die Wandung befindet sich zwischen der ersten Ebene und der zweiten Ebene.

Das Rohr dient als Pitchrohr. Mit Pitchrohr wird in Fachkreisen ein Leitungsrohr in einer Windkraftanlage bezeichnet, wobei mindestens ein Teil des Leitungsrohrs mindestens teilweise durch eine Rotorwelle der Windkraftanlage verläuft. Die Rotorwelle verbindet einen Rotor, aufweisend eine Rotornabe und vom Wind angetriebene Rotorblätter drehfest mit einer Eingangswelle eines Getriebes. Das Pitchrohr verläuft koaxial zu einer Drehachse der Rotorwelle bzw. des Rotors. Dies bedeutet, dass das Pitchrohr dreh- oder rotationssymmetrisch zu einer Achse ist, die mit der Drehachse der Rotorwelle bzw. des Rotors identisch ist. Der Verlauf des Pitchrohrs durch die Rotorwelle bedingt, dass das Pitchrohr auch durch andere Getriebeteile, wie etwa im vorliegenden Fall die Wandung des Planetenträgers, verläuft.

Um eine Blatteinstellwinkelregelung (Pitchregelung) vornehmen zu können, sind elektrische Leitungen erforderlich, die zwischen dem Rotor und einem generatorseitigen Anschluss verlaufen. Das Pitchrohr dient unter anderem dazu, diese Leitungen durch die Rotorwelle zu verlegen.

Bei der Wandung kann es sich insbesondere um eine Wange des Planetenträgers handeln. Eine Wange ist eine Stützstruktur, in der sämtliche Planetenbolzen der Planetenstufe fixiert sind. Die Wange und die Planetenräder sind axial versetzt zueinander angeordnet. Dies impliziert, dass zwischen der Wange und den Planetenrädern ein axialer Zwischenraum verläuft.

Die Wandung weist vorzugsweise einen Durchgang bzw. ein durchgängiges Loch auf, in dem sich ein Teil des Rohrs befindet. Hierbei handelt es sich um einen Teil des Rohrs, der mit dem Durchgang axial deckungsgleich ist. Der Teil befindet sich zwischen den beiden Mündungen des Rohrs.

Das Fixierelement ist in der Wandung fixiert. Die Fixierung erfolgt vorzugsweise axial unverschiebbar, d.h. derart, dass Verschiebungen des Fixierelements relativ zu der Wandung durch die Fixierung begrenzt werden. Insbesondere kann das Fixierelement starr in der Wandung fixiert sein. In diesem Fall unterbindet die Fixierung jegliche Relativbewegungen des Fixierelements zu der Wandung.

Das Rohr weist eine erste Nut auf. Eine Nut ist eine längliche Vertiefung einer Oberfläche, vorliegend einer Mantelfläche eines Rohrs. Gegenüber anderen Arten von Vertiefungen einer Oberfläche zeichnet sich eine Nut durch einen entlang des Verlaufs der Nut unveränderlichen Querschnitt aus. Der Querschnitt ist gegenüber einer orthogonal zu einer den Verlauf der Nut beschreibenden Kurve ausgerichteten Schnittebene invariant.

Das Fixierelement greift in mindestens einen Teil der ersten Nut ein. Somit befindet sich mindestens ein Teil des Fixierelements in dem mindestens einen Teil der ersten Nut.

Erfindungsgemäß verläuft der mindestens eine Teil der ersten Nut orthogonal zu der Drehachse der Planetenstufe. Die Kurve, die den Verlauf der Nut beschreibt verläuft in den mindestens einen Teil entsprechend innerhalb einer radial ausgerichteten Ebene.

In dem das Fixierelement in den mindestens einen Teil der ersten Nut eingreift, kommt eine formschlüssige Verbindung zwischen den Fixierelement und der ersten Nut und infolge dessen zwischen dem Fixierelement und dem Rohr zustande. Da der mindestens eine Teil der ersten Nut orthogonal zu der Drehachse ausgerichtet ist, wirkt diese Fixierung in axialer Richtung und verhindert somit eine axiale Verschiebung des Rohrs und des Fixierelements relativ zueinander. Da das Fixierelement in der Wandung fixiert ist, ist infolge dessen auch die axiale Position des Rohrs relativ zu der Wandung festgelegt.

Im Vergleich zu den aus dem Stand der Technik bekannten Lösungen ermöglicht die Erfindung eine besonders einfache Fixierung des Rohrs. Es ist nicht erforderlich, das Rohr mit zusätzlichen Elementen, wie etwa einer Muffe zu versehen.

In einer bevorzugten Weiterbildung umschließt die erste Nut die Drehachse der Planetenstufe. Dies bedeutet, dass die erste Nut in sich geschlossen ist und um die Drehachse herum verläuft. Insbesondere kann die erste Nut bezüglich der Drehachse drehsymmetrisch oder rotationssymmetrisch sein.

Da das Fixierelement in die erste Nut eingreift, muss die Form des Fixierelements der Form der ersten Nut entsprechen. Demgemäß hat das Fixierelement vorzugsweise eine drehsymmetrische oder rotationssymmetrische Grundform. Insbesondere kann es sich bei der Grundform des Fixierelements um einen Ring handeln.

In einer darüber hinaus bevorzugten Weiterbildung ist der Planetenträger drehbar gelagert. Dabei ist das Rohr drehfest an dem Planetenträger fixiert.

Bei der Fixierung des Fixierelements der Wandung handelt es sich um eine direkte Fixierung. Die Planetenstufe ist mit einer Platte weitergebildet, die an der Wandung fixiert ist. Die Platte dient dazu, das Fixierelement formschlüssig in der Wandung zu fixieren. Zu diesem Zweck bildet das Fixierelement mit der Wandung einen Zwischenraum. Der Zwischenraum hat vorzugsweise die Form einer Nut. In den Zwischenraum greift das Fixierelement ein, so dass es formschlüssig zwischen der Wandung und der Platte fixiert ist. Der Zwischenraum verläuft vorzugswiese orthogonal, insbesondere rotationssymmetrisch zu der Drehachse. Auf dieser Weise kommt eine axiale Fixierung des Fixierelements zustande.

Zur drehfesten Fixierung in dem Planetenträger kann das Rohr eine Aussparung aufweisen. Das Fixierelement oder die weiter unten beschriebene Platte bilden eine Nase aus, die in die Aussparung eingreift. Zwischen der Nase und der Aussparung und damit zwischen der Nase und dem Rohr kommt auf diese Weise eine formschlüssige Verbindung zustande, die das Rohr drehfest fixiert.

Ein einstückiges Fixierelement, das um die Drehachse herum verläuft und in sich geschlossen ist, könnte nicht ohne weiteres so montiert werden, dass es in die Nut eingreift. Eine Möglichkeit, dies zu erreichen, wäre ein Spalt, der es erlaubt, das Fixierelement radial aufzudehnen. Der Spalt erstreckt sich radial und in Umfangsrichtung. Der Verlauf des Fixierelements um die Drehachse herum wird durch den Spalt unterbrochen. Ein derartiges Fixierelement wird auch als Sprengring bezeichnet.

Alternativ ist das Fixierelement in einer bevorzugten Weiterbildung mindestens zweistückig ausgeführt. Jedes Stück kann separat in die Nut eingesetzt werden. Im eingesetzten Zustand umschließt das weiterbildungsgemäße Fixierelement die Drehachse, verläuft also vollständig um die Drehachse herum. Zur radialen Fixierung der einzelnen Stücke des Fixierelements dienen die Wandung und/oder die Platte.

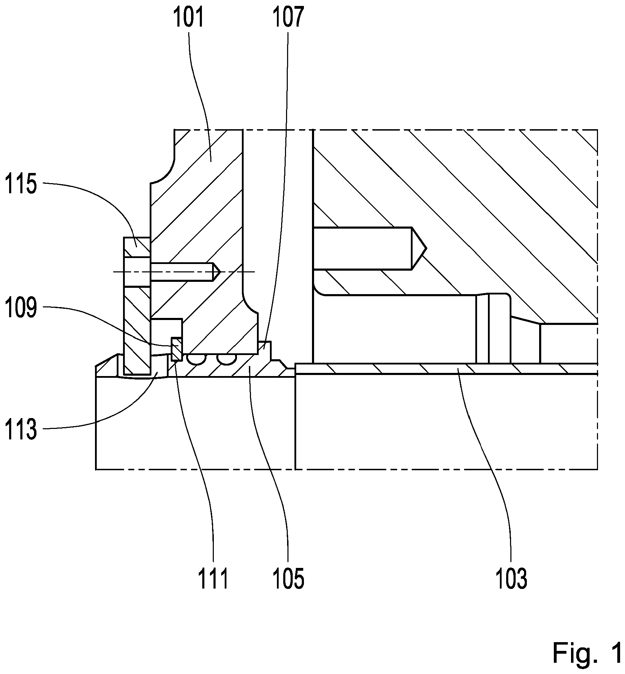

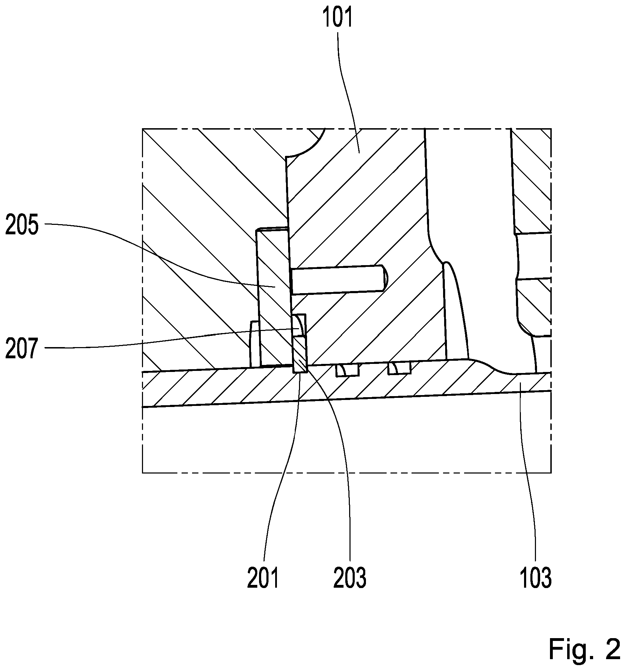

Eine aus dem Stand der Technik bekannte Anordnung ist in Fig. 1 dargestellt. Fig. 2 gibt ein bevorzugtes Ausführungsbeispiel der Erfindung wieder. Übereinstimmende Bezugsziffern kennzeichnen dabei gleiche oder funktionsgleiche Merkmale. Im Einzelnen zeigt:
- Fig. 1: eine aus dem Stand der Technik bekannte Fixierung eines Pitchrohrs; und
- Fig. 2: eine vereinfachte Fixierung des Pitchrohrs.

Bei den Darstellungen der Figuren 1 und 2 handelt es sich jeweils um einen Ausschnitt eines Getriebes einer Windkraftanlage. Dargestellt sind eine Wange 101 eines drehbar gelagerten Planetenträgers und ein Pitchrohr 103, das drehfest in dem Planetenträger bzw. in dessen Wange 103 fixiert ist.

Der Planetenträger ist Teil einer Planetenstufe, zu der darüber hinaus ein Sonnenrad, ein Hohlrad und mehrere Planetenräder gehören. Die Planetenräder sind jeweils drehbar auf einem Planetenbolzen gelagert, der in der Wange 101 fixiert ist. Jedes Planetenrad kämmt mit dem Hohlrad und dem Sonnenrad.

Der Planetenstufe nach- und/oder vorgeschaltet sein können weitere Planetenstufen und/oder Stirnradstufen. Der Antrieb erfolgt über einen Rotor, der drehfest mit dem Planetenträger oder einer drehbaren Komponente einer gegebenenfalls vorgeschalteten Planetenstufe verbunden ist. Als Abtrieb dient eine drehfest mit dem Sonnenrad verbundene Sonnenwelle. Die Sonnenwelle treibt eine nachgeschaltete Planeten- oder Stirnradstufe an oder ist drehfest mit einem Rotor eines Generators verbunden.

Die in den Figuren 1 und 2 dargestellten Anordnungen unterscheiden sich hinsichtlich der Fixierung des Pitchrohrs 103 in der Wange 101 des Planetenträgers. Gemäß Fig. 1 ist eine Muffe 105 auf das Pitchrohr 103 aufgesetzt. Die Muffe 105 bildet einen Absatz 107 aus, der an der Wange 101 des Planetenträgers anliegt. Auf einer dem Absatz 107 gegenüberliegende Seite der Wange 101 des Planetenträgers liegt ein Sprengring 109 an. Der Sprengring 109 ist in eine Nut 111 der Muffe 105 eingesetzt. Auf diese Weise erfolgt eine axiale Fixierung des Pitchrohrs 103.

Um zu verhindern, dass sich das Pitchrohr 103 relativ zu dem Planetenträger verdreht, weist es eine Aussparung 113 auf. In die Aussparung 113 greift eine Sicherungslasche 115 ein, die mit der Wange 101 des Planetenträgers verschraubt ist.

Gemäß der in Fig. 2 dargestellten Lösung ist das Pitchrohr 103 mit einer Nut 201 versehen. Ein Ring 203 greift in die Nut 201 ein. Der Ring 203 wiederum ist in der Wange 101 des Planetenträgers fixiert. Auf diese Weise kommt eine Fixierung des Pitchrohrs 103 zustande. Die Muffe 105 kann entfallen.

Durch die Nut 201 besteht eine formschlüssige Verbindung zwischen dem Ring 203 und dem Pitchrohr 103. Um auch eine formschlüssige Verbindung zwischen dem Ring 203 und der Wange 101 des Planetenträgers herzustellen, ist eine Platte 205 vorgesehen, die mit der Wange 101 verschraubt ist.

Zwischen der Platte 205 und der Wange 101 befindet sich der Ring 203. Damit wird die axiale Beweglichkeit des Rings in eine Richtung durch die Platte und in entgegengesetzter Richtung durch die Wange 101 des Planetenträgers begrenzt. Zur Aufnahme des Rings 203 weist die Wange 101 des Planetenträgers eine um das Pitchrohr 103 herumlaufende Vertiefung 207 auf. Die Vertiefung 207 wird durch die Platte 205 abgedeckt. Zusammen mit der Nut 201 bildet die Vertiefung 207 einen abgeschlossenen Hohlraum, in dem sich der Ring 203 befindet.

### Bezugszeichen

- 101: Wange eines Planetenträgers
- 103: Pitchrohr
- 105: Muffe
- 107: Absatz
- 109: Sprengring
- 111: Nut
- 113: Aussparung
- 201: Nut
- 203: Ring
- 205: Platte
- 207: Vertiefung

## Patentansprüche

1. Planetenstufe mit einem Planetenträger, mindestens einem Pitchrohr (103) und mindestens einem Fixierelement (203); wobei
das Pitchrohr (103) koaxial zu einer Drehachse der Planetenstufe angeordnet ist;
und wobei
das Pitchrohr (103) durch eine Wandung (101) des Planetenträgers hindurchgeführt
ist; wobei
das Fixierelement (203) in der Wandung (101) fixiert ist; wobei
das Pitchrohr (103) eine Nut (201) aufweist; wobei
das Fixierelement (203) in mindestens einen Teil der Nut (201) eingreift; wobei
der mindestens eine Teil der Nut (201) orthogonal zu der Drehachse verläuft; zudem umfassend
eine in der Wandung (101) fixierte Platte (205), die das Fixierelement formschlüssig in der Wandung fixiert; wobei
das Fixierelement (203) in einen Zwischenraum (207) zwischen der Wandung (101) und der Platte (205) eingreift, so dass es formschlüssig zwischen der Wandung (101) und
der Platte (205) fixiert ist.

2. Planetenstufe nach Anspruch 1; **dadurch gekennzeichnet, dass**
die Nut (201) die Drehachse umschließt.

3. Planetenstufe nach einem der vorhergehenden Ansprüche; **dadurch gekennzeichnet, dass**
der Planetenträger drehbar gelagert ist; wobei
das Pitchrohr (103) drehfest in dem Planetenträger fixiert ist.

4. Planetenstufe nach einem der vorhergehenden Ansprüche; **dadurch gekennzeichnet, dass**
das Pitchrohr (103) eine Aussparung aufweist; wobei
das Fixierelement (203) oder die Platte (205) eine Nase ausbildet; und wobei
die Nase in die Aussparung eingreift.

5. Planetenstufe nach einem der vorhergehenden Ansprüche; **dadurch gekennzeichnet, dass**
das Fixierelement (203) mindestens zweistückig ausgeführt ist.

## Claims

1. Planetary stage having a planet carrier, at least one pitch tube (103) and at least one fixing element (203); wherein
the pitch tube (103) is arranged coaxially with an axis of rotation of the planetary stage; and wherein
the pitch tube (103) passes through a wall (101) of the planet carrier; wherein
the fixing element (203) is fixed in the wall (101); wherein
the pitch tube (103) has a groove (201); wherein
the fixing element (203) engages in at least one part of the groove (201); wherein
the at least one part of the groove (201) extends orthogonally to the axis of rotation; also comprising a plate (205) that is fixed in the wall (101) and fixes the fixing element in the wall in a form-fitting manner; wherein
the fixing element (203) engages in an intermediate space (207) between the wall (101) and the plate (205) such that it is fixed in a form-fitting manner between the wall (101) and the plate (205).

2. Planetary stage according to Claim 1; **characterized in that**
the groove (201) encircles the axis of rotation.

3. Planetary stage according to either of the preceding claims; **characterized in that**
the planet carrier is mounted in a rotatable manner; wherein
the pitch tube (103) is fixed in the planet carrier for conjoint rotation.

4. Planetary stage according to one of the preceding claims; **characterized in that**
the pitch tube (103) has a cutout; wherein
the fixing element (203) or the plate (205) forms a lug; and wherein
the lug engages in the cutout.

5. Planetary stage according to one of the preceding claims; **characterized in that**
the fixing element (203) is embodied in at least two pieces.

## Revendications

1. Etage planétaire, comprenant un porte-satellites, au moins un tube pour conduits (103) et au moins un élément de fixation (203) ; dans lequel
le tube pour conduits (103) est disposé coaxialement à un axe de rotation de l'étage planétaire ; et dans lequel
le tube pour conduits (103) traverse une paroi (101) du porte-satellites ; dans lequel
l'élément de fixation (203) est fixé dans la paroi (101) ; dans lequel
le tube pour conduits (103) présente une rainure (201) ; dans lequel
l'élément de fixation (203) vient en prise dans au moins une partie de la rainure (201) ; dans lequel
ladite au moins une partie de la rainure (201) s'étend de manière orthogonale à l'axe de rotation ; comprenant en outre
une plaque (205) fixée dans la paroi (101) et qui fixe l'élément de fixation dans la paroi par complémentarité de forme ; dans lequel
l'élément de fixation (203) vient en prise dans un espace (207) entre la paroi (101) et la plaque (205) de sorte qu'il est fixé par complémentarité de forme entre la paroi (101) et la plaque (205).

2. Etage planétaire selon la revendication 1 ; **caractérisé en ce que** la rainure (201) entoure l'axe de rotation.

3. Etage planétaire selon l'une quelconque des revendications précédentes ; **caractérisé en ce que** le porte-satellites est monté en rotation ; dans lequel le tube pour conduits (103) est fixé de manière verrouillée en rotation dans le porte-satellites.

4. Etage planétaire selon l'une quelconque des revendications précédentes ; **caractérisé en ce que** le tube pour conduits (103) présente un évidement ; dans lequel l'élément de fixation (203) ou la plaque (205) réalise un bec ; et dans lequel le bec vient en prise dans l'évidement.

5. Etage planétaire selon l'une quelconque des revendications précédentes ; **caractérisé en ce que** l'élément de fixation (203) est réalisé au moins en deux parties.
